# EUROPÄISCHE PATENTSCHRIFT

(11) **EP 3 313 918 B1**
(45) Veröffentlichungstag und Bekanntmachung des Hinweises auf die Patenterteilung: **25.05.2022**
(21) Anmeldenummer: 16744657.4
(22) Anmeldetag: 17.06.2016
(51) Int. Cl.: C08J 5/12, C08L 1/12, C08J 7/046, C08J 7/044, C08J 7/043, C09D 4/00, C09D 101/14, C08J 7/04, C09D 133/06, G02B 21/34

(54) **HOCHTRANSPARENTE BESCHICHTETE CELLULOSETRIACETATFOLIE**
HIGHLY TRANSPARENT COATED CELLULOSETRIACETATE FILM
FILM DE CELLULOSE TRIACÉTATE REVÊTU ET TRÈS TRANSPARENT

(30) Priorität: 23.06.2015 DE 102015008336
(43) Veröffentlichungstag der Anmeldung: 02.05.2018
(73) Patentinhaber: Island Polymer Industries GmbH, 06766 Bitterfeld-Wolfen (DE)
(72) Erfinder: PARIZAT, Amnon, Old Westbury, New York 11568 (US); HÄRTER, Gernod, 06766 Bitterfeld-Wolfen (DE); BÖTTCHER, Silvio, 04157 Leipzig (DE); PILS, Anne, 04317 Leipzig (DE); OSTAS, Elena, 06108 Halle (DE)
(74) Vertreter: Fischer, Volker
(86) Internationale Anmeldenummer: PCT/DE2016/000254
(87) Internationale Veröffentlichungsnummer: WO 2016/206672

(56) Entgegenhaltungen:
- WO-A1-02/12857
- US-A- 4 407 990
- US-A- 4 853 262
- US-A1- 2007 258 940
- HIROAKI SATA ET AL: "5.4 Properties and applications of cellulose triacetate film", MACROMOLECULAR SYMPOSIA, Bd. 208, Nr. 1, 1. März 2004 (2004-03-01), Seiten 323-334, XP055102021, ISSN: 1022-1360, DOI: 10.1002/masy.200450413

## Beschreibung

Die Erfindung betrifft eine hochtransparente Folie auf der Basis von Cellulosetriacetat (CTA), die durch eine multifunktionale Beschichtung sowohl eine verbesserte Haftung an Oberflächen aus Glas, Holz, Keramik, Metall und Kunststoff aufweist als auch mit der Beschichtung selbst eine konservierende und protektive Funktion für Materialien besitzt, die in die Beschichtungsmatrix eingebettet werden können.

Des Weiteren ist ein als Anlösemedium geeignetes Lösungsmittelgemisch zum Anlösen der multifunktionalen Beschichtung beschrieben, insbesondere für das Ankleben der Folien auf Oberflächen aus Glas, Holz, Keramik, Metall und Kunststoff. Unter Anlösen versteht man die Überführung einer zuvor festen Beschichtungsschicht in einen zähviskosen Zustand durch Einwirken eines oder mehrerer Lösungsmittel.

Seit mehr als 100 Jahren werden Filmfolien auf der Basis von Cellulosederivaten hergestellt, die als Trägermaterial für fotografisch aktive Schichten, als Trägermaterial für Membranen oder - vor allem in den vergangenen 10 Jahren - auch als optisch inertes Schutzmaterial für Flüssigkristallanzeige (LCD)-Kristall-Schichten und polarisierende Schichten in LCD-Bildschirmen eingesetzt werden. Als bevorzugte Materialien werden hier Celluloseester, wie zum Beispiel Cellulosetriacetat (CTA), Diacetatcellulose (DAC), Celluloseacetatbutyrat (CAB) oder Celluloseacetatpropionat (CAP) oder Kombinationen dieser Cellulosederivate eingesetzt.

Zirka seit Beginn des zweiten Jahrtausends werden Filme auf der Basis von Cellulosetriacetat auch als Bestandteil von Schutzfolien, Sonnenbrillen, Skibrillen, Schutzbrillen und Spezialbrillen verwendet.

Üblicherweise werden hier verschiedene Filme unterschiedlicher Dicke und Funktionalität miteinander verklebt, wobei zur Verbesserung der Verklebungseigenschaften die Oberfläche der Cellulosetriacetatfolie chemisch modifiziert (saponifiziert) werden muss.

Die hierzu verwendeten CTA-Folien werden in einem vergleichsweise aufwändigen Gießverfahren hergestellt, welches im Wesentlichen auf den Prozessschritten Lösen, Filtrieren, Entgasen, Auftragen und Trocknen basiert, wobei jeder Folienhersteller über ein spezifisches, individuell entwickeltes Herstellungsverfahren verfügt.

Durch Zugabe von Additiven kann hierbei das Produkt in seinen Eigenschaften, wie zum Beispiel UV-Beständigkeit, thermischer Beständigkeit, Dehnungsverhalten, Transmission, Absorptionsverhalten oder Blockingverhalten, entsprechend der geforderten Kundenspezifikationen verändert bzw. optimiert werden.

Des Weiteren wird oftmals auch eine funktionelle Beschichtung auf die Folienoberfläche einseitig oder beidseitig aufgetragen, um verbesserte antistatische Eigenschaften oder beispielsweise ein verbessertes Gleitverhalten zu erreichen. Diese Verfahrensweise wird vor allem bei der Produktion von Filmfolien für fotografische Filme eingesetzt.

Entsprechend der jeweiligen Eigenschaftsausstattung werden CTA-Folien als UV-Schutzfilm, gehärteter Film, farbiger Film, Retardation-Film, PVA-Schutzfilm, thermisch belastbarer Zwischenlagefilm, Schwarzweiß-Unterlagefilm oder Farb-Unterlagefilm angeboten. Für die Fertigung der Endprodukte, wie zum Beispiel LCD-Bildschirme oder Sonnenschutzbrillen, ist stets die Verklebung unterschiedlicher funktionaler Filme erforderlich, um ein bestmögliches Eigenschaftsprofil zu erhalten.

Eine Verklebung ist auch erforderlich, wenn man CTA-Folien beispielsweise als Fensterschutzfolien (IR-Folien, UV-Folien o.ä.) oder als Möbelplattenschutzfolien oder Möbelfunktionsfolien einsetzen möchte.

Der Einsatz wasserbasierender Klebstoffe ist hierbei problematisch, da die CTA-Folienoberfläche einen unzureichenden Kontaktwinkel aufweist und sich schwer benetzen lässt. Daneben neigt CTA zur Aufnahme von Wasser und verformt sich dadurch.

Eine Alternative besteht in lösungsmittelbasierenden Klebstoffen, das heißt Klebstoffen, die auf nichtwässrigen Lösungsmitteln basieren, die allerdings auch problematisch sind, da die Folienoberfläche meist zu stark angegriffen wird und die optische Qualität der Folie an der Grenzfläche sich stark verschlechtert. Lösungsmittelreste verbleiben meist sehr lang in der Grenzflächenschicht und diffundieren nur sehr langsam aus der Matrix heraus, was unter Umständen langfristig auch Verformungen des Verbundes zur Folge hat.

Viele der auf dem Markt verfügbaren Klebstoffe weisen zudem einen anderen Brechungsindex als CTA auf und führen dadurch an den Grenzflächen zu einer Beeinträchtigung der optischen Parameter des Verbundes bis hin zu Beugungsspektren oder dem Auftreten eines schlierigen Gesamteindruckes der transparenten Verklebungsfläche.

Ein weiterer Nachteil besteht in den oftmals sehr komplexen Herstellungs- und Auftragsverfahren für die haftvermittelnden Beschichtungen von CTA-Folien und der Beschränkung auf spezielle Einsatzfälle.

Ein typischer Anwendungsfall für haftvermittelnde Schichten auf CTA-Folien findet sich beispielsweise in der Verwendung als Eindeckfolie im Mikroskopierbereich, wie sie zum Beispiel in den Druckschriften US 4853262 A**,** EP 1 070 273 A1 oder WO 2002012857 A1 aufgeführt sind.

Der Einsatz ist hier ausschließlich auf den Mikroskopierbereich beschränkt, und läßt die multifunktionale Verwendbarkeit der beschriebenen Folien als Fensterfolie, Lichtschutzfolie oder als Möbelfolie völlig offen.

Angaben zu Haze-Werten und maximal erreichbaren Transmissionswerten im UVund visuellen Bereich sind hier nicht zu finden, obwohl es sich gerade für Durchlichtanwendungen unter Einfluss von Sonnenstrahlung um wesentliche Beurteilungsgrößen handelt.

Die Druckschrift HIROAKI SATA ET AL : « 5.4 Properties and applications of cellulose triacetate film », MACROMOLECULAR SYMPOSIA, Bd. 208, Nr. 1, 1.März 2004 (2004 (2004-03-01), Seiten 323-334, XP055102021, ISSN : 1022 bis 1360, DOI : 10.1002/masy.200450413 offenbart einen Cellulosetriacetat-Film mit einem Haze-Wert von 0,2.

Die US 4 407 990 A beschreibt eine Acrylat-Beschichtungslösung für Autolacke, die Folgendes umfasst: a) eine Lösung in einem flüchtigen organischen Lösungsmittel von einem Acrylcopolymer aus 75-90 % Methylmethacrylat, 1,5 bis 6 % Dimethylaminoethylmethacrylat und 8 bis 23,5 % Butylacrylat, Butylmethacrylat oder Laurylmethacrylat, wobei das Copolymer eine Glasübergangstemperatur Tg von 80 °C bis 95 °C hat, b) eine Lösung in einem flüchtigen organischen Lösungsmittel von Celluloseacetatbutyrat und c) einen monomeren Ester als Weichmacher.

In der US 2007/258940 A1 ist unter anderem ein Anlösemedium für Celluloseester beschrieben, das eine Mischung aus einem langsam verdampfenden Lösungsmittel, zum Beispiel Propylenglykolmonomethyletheracetat, und einem schnellverdampfenden Lösungsmittel, zum Beispiel Ethanol oder Ethylacetat, umfasst.

Bei der Suche nach einem hochtransparenten optisch unauffälligen Klebstoffmaterial zur Verklebung von Cellulosetriacetatfolien untereinander und auch mit anderen Trägermaterialien wie Glas, Holz, Metall, Polymethylmethacrylat (PMMA) und anderen wurde überraschend festgestellt, dass durch Einsatz einer Beschichtungslösung bestehend aus einem Lösungsmittel oder Lösungsmittelgemisch, einem Acrylatcopolymer, einem Cellulosederivat sowie einem Weichmacher, eine klebstoffähnliche Schicht erhalten werden kann, die sowohl durch Erwärmung als auch durch geringfügigen Einsatz eines Lösungsmittels eine gute Verklebbarkeit der CTA-Folie mit Glasoberflächen, Kunststoffoberflächen, Holz und auch anderen CTA-Folien ermöglicht. Diese Beschichtung ist hochtransparent und weist nahezu den gleichen Brechungsindex wie Cellulosetriacetat auf.

Weitere Untersuchungen ergaben, dass durch die Modifizierung der CTA-Folienoberfläche in Form einer dünnen Haftvermittlungsschicht eine Verbesserung des Langzeit-Haftungsverhaltens erzielt werden kann. Durch Optimierung und Kombination verschiedener Additive kann für bestimmte Anwendungen zudem eine Erhöhung der Einsatztemperatur bis auf 95 °C erreicht werden.

Ein weiterer Vorteil ist die multifunktionelle Einsetzbarkeit derart beschichteter CTA-Folien für Anwendungen im Fensterbereich, Sonnenbrillenbereich, Mikroskopierbereich oder auch im Möbelbaubereich, wobei auf aromatische Lösungsmittel zur Anlösung der Klebeschicht bei Bedarf vollständig verzichtet werden kann. Hier genügt bereits der Einsatz von speziell entwickelten ethanolhaltigen Etherlösungen oder ethanolhaltigen Carbonsäureesterlösungen mit deutlich geringerer Toxizität als es bei Aromaten der Fall ist.

Die Aufgabe der Erfindung besteht darin, durch die Herstellung und das Auftragen einer möglichst einfach aufgebauten und auf speziell adaptierten CTA-Folien universell einsetzbaren multifunktionalen Beschichtungslösung den Einsatzbereich dieser CTA-Folien durch die verbesserte Verklebbarkeit deutlich zu erweitern und mit einer einzigen Folie oder Kombination dieser Folien Anwendungen als Fensterfolie, Eindeckfolie, Sonnenbrillenfolie, Möbelfolie, Schutzfolie oder als Konservierungsfolie für empfindliche Oberflächen zu ermöglichen.

Hierbei soll eine Verklebung sowohl durch Einsatz von Lösungsmitteln oder Lösungsmittelgemischen möglichst geringer Toxizität als auch direkt durch thermisch unterstützte Pressverfahren ermöglicht werden.

Durch Auftragen dieser adhäsiven Beschichtung auf multifunktionale CTA-Folien mit beispielsweise UV- oder IR-Licht absorbierender Funktion oder einer definierten Farbe soll zudem eine vereinfachte Kombination dieser Folien für die Herstellung von Laminaten und Verbundsystemen ermöglicht werden.

Die Aufgabe der Erfindung wird durch eine hochtransparente Folie auf der Basis von Cellulosetriacetat mit den Merkmalen des Anspruchs 1 erfüllt. Die erfindungsgemäße hochtransparente Folie auf der Basis von Cellulosetriacetat umfasst:
a) eine als Trägerschicht wirkende Trägerfolie, die Cellulosetriacetat oder ein Gemisch aus Celluloseestern und Cellulosetriacetat als Hauptkomponente enthält, wobei das Cellulosetriacetat oder das Gemisch eine hohe Reinheit und Qualität aufweist, die durch einen Haze-Wert von ≤ 0,5 %, bestimmt durch Methode ASTM D 1003, D 1044, definiert ist, gemessen an dem zu einer Folie ausgezogenen, zuvor in Dichlormethan oder Aceton gelösten Cellulosetriacetat oder Gemisch mit einer Schichtdicke von 100 µm; wobei die Trägerfolie zur Verbesserung des Langzeithaftungsverhaltens vorzugsweise eine einseitig oder beidseitig vorliegende Oberflächenschicht auf der Basis eines in Halogenalkanen, Ketonen, Ethern, Estern, stark eutektischen Lösungsmitteln oder Alkoholen vollständig gelösten oder teilweise angelösten Celullosederivates oder Cellulosederivatgemisches und/oder eines Acrylatgemisches, welches mit UV-Licht, chemisch oder durch Zufuhr thermischer Energie vernetzbar ist, aufweist und
b) eine in einer Beschichtungslösung einseitig oder beidseitig auf die Trägerfolie aufgetragene multifunktionale Beschichtung, die die folgenden Komponenten umfasst:
   b₁) ein oder mehrere Lösungsmittel aus den nachfolgend aufgeführten Gruppen:
      ◆ Alkohole: Methanol, Ethanol, Propanol, Butanol, Hexanol;
      ◆ halogenorganische Lösungsmittel: Chloroform, Dichlormethan, Trichlormethan, Tetrachlormethan, Trichlorethan;
      ◆ Ether: Dimethylether, Diethylether, Dipropylether, Polyether, Glycolether, Tetrahydrofuran, Dioxan;
      ◆ Ester: Carbonsäureester, insbesondere Essigsäuremethylester, Essigsäureethylester, Essigsäurepropylester, Essigsäurebutylester, Gamma-Butyrolacton, Gamma-Valerolacton, Kohlensäuredimethylester, Milchsäureethylester, Cyclohexanolacetat,
      ◆ Ketone: Aceton, Methylethylketon, Butylmethylketon;
      ◆ Aromaten: Benzol, Toluol, Xylol, Ethylbenzol;
      ◆ stark eutektische Lösungsmittel (DES) auf der Basis von quartären Ammoniumverbindungen und Wasserstoffbrückenbindungsdonatoren: Cholinchlorid/Harnstoff; Cholinacetat/Harnstoff; Tetrabutylammoniumchlorid/Oxalsäure; Cholinchlorid/Glykol;
   b₂) ein oder mehrere Acrylatpolymere mit einem Brechungsindex (gemessen bei 20 °C) zwischen 1,30 und 1,60, einem mittleren Molekulargewicht Mw zwischen 10.000 und 300.000 g/mol , einer Glasübergangstemperatur von mindestens 35 °C und einer guten Löslichkeit oder Anquellbarkeit in mindestens einem Lösungsmittel aus der Gruppe der aromatischen Lösungsmittel, halogenorganischen Lösungsmittel, Ester, Ether, Ketone, stark eutektischen Lösungsmittel oder Alkohole, wobei das eine oder die mehreren Acrylatcopolymere aus der Gruppe der Methylmethacrylatcopolymere, Ethylacrylatcopolymere, Ethylmeth- acrylatcopolymere, Butylacrylatcopolymere und/oder Butylmethacrylatcopolymere ausgewählt sind;
   b3) mindestens ein einzelnes oder mehrere Cellulosederivate, welche entweder identisch mit dem in der Kontaktschicht, das heißt der Oberflächenschicht der Trägerfolie, gegebenenfalls eingesetzten Cellulosederivat sind oder zumindest in einem Lösungsmittel aus mindestens einer der nachfolgend aufgeführten Lösungsmittelgruppen der Halogenalkane, Ketone, Ether, Ester, stark eutektischen Lösungsmittel oder Alkohole eine Löslichkeit von mindestens 10 g/Liter besitzt,
   b4) einen oder mehrere Weichmacher in einem Mengenanteil zwischen insgesamt 0,01 Massen-% und 15 Massen-%.

Auf diese Weise wird eine hochtransparente Folie mit verbesserten adhäsiven und protektiven Eigenschaften erhalten. Konzeptionsgemäß handelt es sich um eine Kombination aus einer Beschichtung und speziell adaptierten Folien auf der Basis von Cellulosetriacetat.

Das Foliensubstrat enthält dabei vorzugsweise
a₁) ein Cellulosetriacetat oder ein Gemisch aus Cellulosetriacetat und Celluloseestern, welches eine hohe Reinheit und Qualität aufweist, die durch folgende Eigenschaften definiert sind:
   ◆ als Rohstoffbasis Baumwoll-Linters und/oder Wood-Pulp,
   ◆ einen niedrigen Wasseranteil, das heißt von ≤ 1 %,
   ◆ einen niedrigen Anteil freier Essigsäure, das heißt von ≤ 300 ppm,
   ◆ einen niedrigen Anteil von gelbildenden Komponenten, das heißt von ≤ 0,5 %,
   ◆ eine sehr geringe Gelbfärbung, charakterisiert durch eine niedrige Hazen-Farbzahl (APHA-Wert) < 70 (bestimmt an einer 16%-igen Lösung von Cellulosetriacetat gelöst in Methylenchlorid nach der Methode ASTM D-1209),
   ◆ einen niedrigen Anteil, das heißt von ≤ 0,5 %, an Fremdfasern und überoder unterderivatisierten Partikeln mit einer Größe von weniger als 40 µm,
   ◆ einen niedrigen Haze-Wert, das heißt von ≤ 0,5 % des zu einer Folie ausgezogenen, zuvor in Dichlormethan oder Aceton gelösten Cellulosederivats mit einer Schichtdicke von 100 µm,
a2) mindestens einen organischen oder anorganischen Stoff, der als Verbundvermittler und Abstandshalter zwischen den Molekülketten des Cellulosetriacetats wirksam ist und eine verbesserte Flexibilität und Elastizität der Folien im Sinne eines Weichmachers bewirkt sowie eine optimale Entfernung der in die Folie im Rahmen der Beschichtungsprozesses eingetretenen Lösungsmittel während des Trocknungsprozesses nach der Beschichtung ermöglicht;
a3) gegebenenfalls die oben erwähnte, bei Bedarf zur Verbesserung des Kontaktwinkels und/oder der Kratzfestigkeit einseitig oder beidseitig vorliegende Oberflächenschicht mit einer Schichtdicke ≤ 5 µm auf der Basis eines in Halogenalkanen, Ketonen, Ethern, Estern, stark eutektischen Lösungsmitteln oder Alkoholen vollständig gelösten oder teilweise angelösten Celullosederivates oder Cellulosederivatgemisches und/oder eines Acrylatgemisches, welches
mit UV-Licht, chemisch oder durch Zufuhr thermischer Energie vernetzbar ist, a4) gegebenenfalls weitere funktionale Additive aus den folgenden Gruppen:
   ◆ organische oder anorganische Stoffe mit einer transmissionsbeeinflussenden absorptiven Funktion im Wellenlängenbereich von 300 nm bis 2.500 nm,
   ◆ mikroskalige oder nanoskalige Additive zur Verbesserung der Haftung, des Gleitverhaltens oder der elektrostatischen Eigenschaften,
   ◆ Stabilisierungsmittel,
   ◆ Vernetzungsmittel und/oder
   ◆ Antioxidantien.

Die Angaben zum Haze-Wert wurden mit dem Haze-Messgerät "haze-gard plus (4725)" der Firma BYK Gardner entsprechend der Methode ASTM D 1003, D 1044 ermittelt. Die genannten Partikelgrößen im Nanometerbereich wurden durch die Hersteller mit Hilfe der Röntgendiffraktometrie und im Mikrometerbereich durch die Methode der Filtration über verschiedene Filter mit jeweils exakt definierter Porenweite, zum Beispiel 20 µm,10 µm oder 5 µm, bestimmt.

Nach einer bevorzugten Ausführungsform der Erfindung stammen die entsprechend a2) und b₄) ausgewählten, als Weichmacherkomponente wirksamen Stoffe aus der Gruppe der Phosphorsäureester, Phthalsäureester, Polyester, Carbonsäureester, wie zum Beispiel Zitronensäureester, Fettsäureester, Adipinsäureester, und/oder stark eutektischen Lösungsmittel und/oder Glykole, wobei auch weitere Substanzen mit ähnlicher Funktionalität eingesetzt werden können. Bevorzugt weisen diese Stoffe einen Siedepunkt größer als 60 °C auf.

Als Phosphorsäureester können/kann dabei zum Beispiel Triphenylphosphat, Biphenyldiphenylphosphat, Tricresylphosphat, Cresyldiphenylphosphat, Octyldiphenylphosphat, Ethylhexyldiphenylphosphat, Isodecyldiphenylphosphat, Butylenbis(diethylphosphat), Ethylenbis(diphenylphosphat), Triethylphosphat, Tri-n-butylphosphat, Phenylenbis(diphenylphosphat), Phenylenbis(dibutylphosphat) und/oder Resorcinolbis(diphenylphosphat) eingesetzt werden.

Als Phthalsäureester können/kann zum Beispiel Diethylphthalat, Dimethoxyethylphthalat, Dimethylphthalat, Dioctylphthalat, Dicyclohexylphthalat, Diisononylphthalat, Dibenzylphthalat, Benzylethylphthalat, Butylbenzyl-phthalat, Methylphthalylmethylglykolat, Ethylphthalylethylglykolat, Propyl-phthalyl-propylglykolat, Butylphthalylbutylglykolat und/oder Dicyclohexylterephthalat ausgewählt werden.

Als Carbonsäurester, einschließlich Zitronensäureester, Fettsäureester und Adipinsäureester, eignen/eignet sich zum Beispiel Sorbitolhexylpropionat, Xylitolpentaacetat, Trimethyltrimellitat, Triethyltrimellitat, Tributyltrimellitat, Diethylenglykoldibenzoat, Dipropylenglykoldibenzoat, Triethylenglykolbis-(2-ethylhexanonat), Tartrate, Oleate, Sebacate, Azelate, Ricinoleate, Diphenylsuccinat, Di-2-naphthyl-1,4-cyclohexyldicarboxylat, Tricyclohexyltri-barbamat, Tetra-3-methylphenyltetrahydrofuran-2,3,4,5-tetracarboxylat, Tetra-butyl-1,2,3,4-cyclopentyltetracarboxylat, Triphenyl-1,3,5-cyclohexyltricarboxylat, Triphenylbenzyl-1,3,5-tetracarboxylat, Triethylcitrat, Acetyltrimethylcitrat, Acetyltriethylcitrat, Acetyltributylcitrat, Dimethyladipat, Dioctyladipat, Dicyclohexyladipat, 2,2,4,4-Tetramethylcyclobutan-1,3-dioldiacetat, 2,2-Dimethyl-4,4-diethylcyclobutan-1,3-diol-diisobutyrat, 2,2,4,4-Tetramethylcyclo-butan-1,3-diol-di-n-decanonat, 2,2,4,4-Dimethylcyclobutan-1,3-diolbis(2-ethylhexanonat), Octylepoxytallat und/oder 2,2,4-Trimethyl-1,3-pentandiol-diisobutyrat.

Als stark eutektische Lösungsmittel sind Gemische aus quartären Ammoniumverbindungen und Wasserstoffbrückenbindungsdonoren, wie z.B. Gemische aus Cholinchlorid und Harnstoff, Cholinchlorid und Glykolen, Cholinchlorid und Zucker, Cholinacetat und Harnstoff, Tetrabutylammoniumchlorid und Oxalsäure sowie stark eutektisch wirksame Verbindungen aus Halidsalzen und Carbonsäuren, bevorzugt. Stark eutektische Lösungsmittel sind allgemein unter der englischen Fachbezeichnung "Deep eutectic solvents" (DES) bekannt. Als stark eutektische Lösungsmittel werden mehrkomponentige Salzschmelzen bezeichnet, deren Einzelkomponenten im Phasengleichgewicht stehen und deren gemeinsamer Schmelzpunkt vergleichsweise weit unter den Schmelzpunkten der Einzelkomponenten liegt. Diese Schmelzen sind stark ionisch und wirken somit als Lösungsmittel für Metallsalze, aber auch für Cellulose.

Als Glykol sind/ist Glycerintriacetat (Triacetin), Gylcerintriproprionat (Triproprionin), Polyethylenglykol, Triethylenglykolbis-(2-ethylhexanonat), Diethylenglykoldibenzoat und/oder Dipropylenglykoldibenzoat bevorzugt.

Als Polyester können/kann zum Beispiel Polyestersuccinat und/oder Polyesteradipat eingesetzt werden.

Als weitere Substanzen mit ähnlicher Funktionalität eignen sich zum Beispiel Kampfer, Kampferanhydrid oder Butylbenzylsulfonamid.

Als Beschichtungsgrundstoff für die optionale Oberflächenschicht bzw. Kontaktschicht entsprechend a₃) eignen sich insbesondere Celluloseacetat (CA), Cellulosediacetat (CDA), Cellulosetriacetat (CTA), Celluloseacetatbutyrat (CAB) und Celluloseacetatpropionat (CAP). Diese können bevorzugt in einem einzelnen oder Gemisch der Lösungsmittel aus der Gruppe der Halogenalkane, Ketone, Ester, Ether, stark eutektischen Lösungsmittel und Alkohole aufgelöst und mit Hilfe eines Rakels, einer Antragswalze, eines Sprühkopfes oder einer Schlitzdüse auf das Foliensubstrat entweder während des Folienherstellungsprozesses oder im Rahmen eines dem eigentlichem Beschichtungsprozess vorgelagerten Prozesses aufgetragen werden, wobei die Schichtdicke der trockenen Schicht bei maximal 5 µm liegt.

Als Beschichtungsgrundstoff entsprechend a₃) für eine Kontakt- und Hardcoatschicht auf der Basis eines UV-, chemisch oder thermisch vernetzbaren Acrylatgemisches eignen sich handelsübliche Hardcoatlacke, wie zum Beispiel "Hardcoat EC200-08" der Fa. Kriya Materials B.V., (Geleen, Niederlande) oder "SilFORT UVHC 7800" der Fa. Momentive Performance Materials Inc. (Leverkusen, Deutschland).

Als funktionale Additive entsprechend a₄) können vorzugsweise Stoffe mit folgenden Eigenschaften eingesetzt werden:
◆ UV-Licht absorbierende Stoffe,
◆ IR-Licht absorbierende Stoffe,
◆ visuelles Licht absorbierende Farbstoffe,
◆ Licht im Wellenlängenbereich von 300 nm bis 2.500 nm absorbierende oder reflektierende nanoskalige Stoffe mit einer mittleren Partikelgröße von ≤ 200 nm, die den Haze-Wert nur minimal, das heißt mit einem ΔHaze von ≤ 0,05, beeinflussen,
◆ photochrome Farbstoffe,
◆ thermochrome Farbstoffe,
◆ Lumineszensfarbstoffe,
◆ mikroskalige Antiblockierungs- oder Mattierungsmittel mit einer durchschnittlichen Partikelgröße zwischen 1 µm und 5 µm,
◆ nanoskalige Antiblockmittel mit einer durchschnittlichen Partikelgröße zwischen 20 nm und 800 nm,
◆ antioxidativ als Stabilisierungsmittel wirksame, den Haze-Wert nicht beeinflussende transparente Stoffe und
◆ transparente Haftvermittler und Vernetzungsmittel.

Erfindungsgemäß ist die Trägerfolie mit einer multifunktionalen, insbesondere einer adhäsionsverbessernden und konservierenden Beschichtung versehen. Der Begriff "multifunktional" im Zusammenhang mit der Beschichtung beschreibt, dass sich verschiedene Eigenschaften der damit beschichteten Folie durch die Beschichtung bei gleichzeitiger Erhaltung der hohen Transparenz des Trägermaterials erzeugen oder verändern/verbessern lassen. Dies betrifft insbesondere eine Verbesserung der Adhäsionseigenschaften, die Eignung als Klebstoff, die Konservierung des Trägermaterials sowie in der Beschichtung eingebetteter Objekte zum Schutz vor Umwelteinflüssen, gegebenenfalls eine Veränderung der Kratzfestigkeit, von Gleiteigenschaften sowie eine Anlösbarkeit durch Lösungsmittel, in denen das Trägermaterial unlöslich ist.

Die multifunktionale Beschichtung wird in einer Lösung nach einem der oben genannten Beschichtungsverfahren auf die Folie aufgetragen und anschließend getrocknet, wobei die Beschichtungslösung vorzugsweise folgende Komponenten enthält:
b₁) ein oder mehrere der oben genannten Lösungsmittel, wobei mindestens ein Lösungsmittel sowohl den Beschichtungsgrundstoff auflösen als auch das Cellulosetriacetat zumindest anlösen oder zum Quellen bringen kann und einen Verdampfungspunkt oberhalb von 35 °C aufweist,
b2) mindestens ein Acrylatcopolymer mit einem Brechungsindex (gemessen bei 20 °C) zwischen 1,30 und 1,60, einem mittleren Molekulargewicht M_{w} zwischen 10.000 g/mol und 300.000 g/mol und einer Glasübergangstemperatur von mindestens 35 °C und einer guten Löslichkeit oder Anquellbarkeit in mindestens einem Lösungsmittel aus der Gruppe der aromatischen Lösungsmittel, halogenorganischen Lösungsmittel, Ester, Ether, Ketone, stark eutektischen Lösungsmittel oder Alkohole,
b₃) mindestens ein einzelnes oder mehrere Cellulosederivate, welche entweder identisch mit dem in der Kontaktschicht entsprechend Punkt a₃) eingesetzten Cellulosederivat sind oder zumindest in einem Lösungsmittel aus einer der nachfolgend aufgeführten Lösungsmittelgruppen der Halogenalkane, Ketone, Ether, Ester, stark eutektischen Lösungsmittel oder Alkohole eine Löslichkeit von mindestens 10 g/Liter besitzt,
b4) gegebenenfalls einen oder mehrere Weichmacher äquivalent zu den zugehörig zu Punkt a₂) aufgeführten Weichmachern.

Gemäß einer besonders bevorzugten Ausführungsform der Erfindung handelt es sich bei der Komponente b₁) um ein Lösungsmittelgemisch aus maximal zwei Lösungsmitteln, wobei zumindest ein Lösungsmittel die Eigenschaft aufweisen muss, Cellulosetriacetat zumindest anlösen oder anquellen zu können, wobei beide Lösungsmittel zu einer der nachfolgend aufgeführten Lösungsmittelgruppen gehören:
◆ Halogenorganische Lösungsmittel: Dichlormethan, Chloroform,
◆ Ketone: Aceton, Methylethylketon,
◆ Ether: Dimethylether, Diethylether, Dipropylether, Polyether, Glycolether, Tetrahydrofuran, Dioxan,
◆ Ester: Carbonsäureester wie zum Beispiel Essigsäuremethylester, Essigsäureethylester, Essigsäurebutylester, Gamma-Butyrolacton, Cyclohexanolacetat,
◆ Alkohole: Methanol, Ethanol, Propanol, Butanol, Hexanol und
◆ Aromaten: Benzol, Xylol, Toluol, Ethylbenzol,
◆ stark eutektische Lösungsmittel (DES) auf der Basis von quartären Ammoniumverbindungen und Wasserstoffbrückenbindungsdonatoren: Cholinchlorid/Harnstoff; Cholinacetat/Harnstoff; Tetrabutyammoniumchlorid/Oxalsäure; Cholinchlorid/Glykol.

Besonders vorteilhaft ist jedoch die Verwendung eines einzelnen Lösungsmittels oder von zwei Lösungsmitteln aus der selben Lösungsmittelgruppe, da auf diesem Weg der nachgelagerte Trocknungs- und Rückgewinnungsprozess sehr effizient und an das System angepasst vorgenommen werden kann. Der Einsatz eines singulären Lösungsmittels oder von zwei Lösungsmitteln aus der selben Lösungsmittelgruppe bietet weiterhin den Vorteil, eine dauerhaft stabile und sehr homogene Beschichtungslösung mit exakt definierter Viskosität herstellen zu können. Dadurch kann auch der eigentliche Beschichtungsprozess mit hoher Qualität und Reproduzierbarkeit durchgeführt werden.

Die Untersuchungen zur Entwicklung der multifunktionalen Beschichtung zeigten, dass zwischen Acrylatcopolymeren und Cellulosetriacetat langfristig meist nur eine unbefriedigende Verbindung bzw. Haftung besteht. Als Acrylatcopolymere eignen sich aufgrund der schlechten Haftungseigenschaften zur CTA-Oberfläche nur wenige Substanzen, wobei insbesondere Acrylatcopolymere mit einer hohen Glasübergangstemperatur von mehr als 80 °C problematisch sind. Üblicherweise (siehe Patentschrift US 4853262 A) werden deshalb verschiedene Copolymere mit unterschiedlichen Glasübergangstemperaturen miteinander kombiniert, woraus sich allerdings bei einem Wiederanlösen der Beschichtung und erneutem Verfestigen optische Probleme, wie Schlierenbildung, bzw. auch Haftungsprobleme ergeben können.

In der bevorzugten Ausführungsvariante der multifunktionalen Beschichtung wurde auf die Kombination unterschiedlicher Acrylatcopolymere verzichtet und stattdessen als wesentliches Merkmal der Erfindung eine Kombination aus einem einzelnen Acrylatcopolymer und einem Cellulosederivat eingesetzt, die deutlich bessere Haftungseigenschaften und eine gute thermische Belastbarkeit aufweist.

Erfindungsgemäss werden die Acrylatpolymere ausgewählt aus den Polymeren folgender Gruppen:
◆ Methylmethacrylat-Copolymere: zum Beispiel Elvacite 2669, 2823, 2927, 2552C (Lucite International Inc., Cordova, USA), Paraloid B44, A14, A101 (Rohm and Haas/Dow Chemical Company, USA),
◆ Ethylacrylat- oder Ethylmethacrylat-Copolymere: zum Beispiel Elvacite 2042, 2043 (Lucite International Inc., Cordova, USA), Paraloid B 66, B 72, B 82 (Rohm and Haas/Dow Chemical Company, USA), Optema TC 110 (Exxon Mobil Chemical, Houston, USA),
◆ Butylacrylat- oder Butylmethylacrylat-Copolymere: zum Beispiel Elvacite 2044, 2045, 2776, 2823, 4028 (Lucite International Inc., Cordova, USA), Paraloid B48N, B48S, B66, B67, B99 (Rohm and Haas/Dow Chemical Company, USA), Neocryl B723 (DSM Coating Resins B.V., Zwolle, Niederlande).

Die Cellulosederivatkomponente kann aus den folgenden Substanzklassen ausgewählt werden:
◆ Celluloseacetat: zum Beispiel Celluloseacetat der Fa. Celanese (Sulzbach, Deutschland), Eastman ^{™} Cellulose Acetate (CA-398-x) (Kingsport, USA),
◆ Celluloseacetatbutyrat: zum Beispiel Eastman^{™} Cellulose Acetate Butyrate (CAB-381-x, CAB 551-x) (Kingsport, USA), Sigma-Aldrich Cellulose Acetate Butyrate (Saint Luis, USA),
◆ Celluloseacetatpropionat: zum Beispiel Eastman^{™} Cellulose Acetate Propionate (CAP-482-x); Sigma-Aldrich Cellulose Acetate Propionate (Saint Luis, USA),
◆ Cellulosetriacetat: zum Beispiel Eastman^{™} Cellulose Triacetat (CA-436-80S),
◆ Methylcellulose: zum Beispiel METHOCEL Methylcellulosen (DOW Chemical Company, USA),
◆ Ethylcellulose: zum Beispiel Ethylcellulose ET 200 (Kremer Pigmente, Aichstetten, Deutschland), Dow ETHOCEL Ethylcellulosen (DOW Chemical Company, USA),
◆ Hydroxypropylcellulose: zum Beispiel Klucel^{™} (Ashland Speciality Incredients, Wilmington, USA); Hydroxypropylcellulose MW 370.000 (Sigma-Aldrich, Saint Luis, USA).

In Abhängigkeit von der jeweiligen Kombination der Komponenten aus a₁) bis a₄) und b₁) bis b₄) und durch die Anwendung eines speziell adaptierten Beschichtungsund Trocknungsverfahrens erhält man in der Basisausführung hochtransparente beschichtete Cellulosetriacetatfolien mit folgenden Eigenschaften:
◆ Foliendicke: 40 µm bis 350 µm,
◆ Beschichtungsschichtdicke: 0,5 µm bis 100 µm,
◆ sehr niedriger Haze-Wert von < 0,5 %, bezogen auf eine Foliendicke von 120 µm und eine Beschichtungsdicke von 20 µm,
◆ sehr hohe Transparenz, charakterisiert im Bereich 380 nm - 780 nm durch einen Transmissionswert der 20 µm beschichteten, nicht eingefärbten 120 µm-Folie von durchschnittlich > 89 %, gemessen mit Hitachi U-3010 Spectrophotometer,
◆ nahezu identische Brechungsindizes des Foliensubstrates und der Beschichtung,
◆ sehr gute Lager- und Transportfähigkeit als Rollenware oder als geschnittene Folienlagen bei Temperaturen < 40 °C und relativer Luftfeuchte < 60 %, gekennzeichnet durch folgende Eigenschaften der nach 7 Tagen abgerollten Folienrolle bzw. der voneinander getrennten Einzellagen:
   ➢ Anteil miteinander verklebter Bereiche, die nur mit mechanischem Aufwand > 10 N voneinander zu trennen sind: < 0,1 %,
   ➢ Flächenanteil von Abplatzungen außerhalb des Folienrandbereiches von 2 mm: < 0,1 %,
   ➢ Anteil von sichtbar verformten Arealen: < 0,1 %,
   ➢ Anteil von zusätzlich nach der Lagerung aufgetretenen Oberflächenveränderungen, wie z.B. trüben Flecken auf der Beschichtungs- und der gegenüberliegenden Folienseite: < 1 %,
◆ hervorragende Langzeitbeständigkeit der eingesetzten Einzelkomponenten und daraus resultierend auch der beschichteten CTA-Folien, gekennzeichnet durch eine Veränderungsrate der Haze-Werte, der Transmissionswerte und der Haftungsstabilität zwischen Substrat und Beschichtung von
   < 5 %/1.000 h,
◆ schnelle Anlösbarkeit der Beschichtung innerhalb von maximal 5 sec durch geringfügige tropfenweise Zugabe von < 25 mg/cm² eines organischen Lösungsmittels, wie zum Beispiel Dichlormethan, Ethanol, Aceton, MEK, Toluol, Xylol, Ethylbenzol, Methoxypropanol, Methylacetat, Ethylacetat, Butylacetat und anschließend gute Verklebbarkeit und dauerhafte Haftung an ebenen Oberflächen auf Basis folgender Materialien:
   ➢ Glas, zum Beispiel Fensterglas, Objektträgerglas,
   ➢ Cellulosederivatfolien, zum Beispiel Cellulosetriacetatfolie,
   ➢ Holz oder Holzwerkstoff, zum Beispiel Feinspanplatte,
   ➢ Pappe, Papier, zum Beispiel Fotopapier 240 g/m²,
   ➢ Metalle, zum Beispiel Edelstahlblech, Aluminiumblech, Kupferblech,
   ➢ Keramik, zum Beispiel Glaskeramikfliesen,
◆ gute Anhaftung an Oberflächen durch kurzzeitige flächenhafte Anwendung thermischer Energie bis zur Erwärmung auf maximal 150 °C,
◆ Beibehaltung der Transparenz, der Brechungsindizes, der Haze-Werte und der Adhäsion zur Cellulosetriacetatträgerfolie auch nach der Verklebung,
◆ gute Wiederablösbarkeit sowohl durch Krafteinwirkung nach Anhebung einer Folienkante als auch durch Einsatz von Lösungsmitteln wie Ethanol oder Aceton.

Gemäß einer besonders bevorzugten Ausführungsform der Erfindung enthält die Beschichtungslösung maximal zwei Lösungsmittel aus nur einer Lösungsmittelgruppe, ein Acrylatcopolymer, ein Cellulosederivat und einen Weichmacher, woraus sich für die damit in einer Schichtdicke von 5 µm bis 35 µm beschichteten Cellulosetriacetatfolien mit einer Gesamtdicke von 120 µm bis 270 µm folgende Eigenschaften ergeben:
◆ hohe Transparenz, charakterisiert durch einen Haze-Wert von kleiner 0,3 %,
◆ Transmission im visuellen Bereich (380 nm bis 780 nm): durchschnittlich > 89 %,
◆ Restlösungsmittelgehalt: < 2,0 %,
◆ gute Anklebbarkeit auf Glasobjektträger, das heißt bereits mit geringen Lösungsmittelmengen von < 25 mg/cm², die tropfenförmig verteilt sind, kann innerhalb von 5 Sekunden eine stabile Anhaftung des Folienmaterials auf dem Glasobjektträger erreicht werden,
◆ keine Ausbildung von mikroskopisch bei 40-facher bis 400-facher Vergrößerung erkennbaren schlierenartigen Mikrostrukturen nach dem Aufkleben auf den Objektträger,
◆ keine Ausbildung von mikroskopisch erkennbaren Inhomogenitäten nach dem Aufkleben auf den Objektträger,
◆ sehr schmale Randabplatzungszone am Schnittrand von < 1 mm,
◆ gute Temperatur- und Lagerungsbeständigkeit der Rollenware bei Lagerung über 7 Tage bei < 40 °C, das heißt, keine erkennbaren Verklebungen oder Beschichtungsablösungen nach dem Abrollen,
◆ gute mechanische und/oder thermisch unterstützte Prägbarkeit der Beschichtungsoberfläche zur besseren Verteilung der Lösungsmitteltropfen vor dem Aufkleben und zur Verbesserung der Detektion im Folienautomaten,
◆ hohe Formstabilität der Prägestruktur auch nach 7 Tagen Lagerung der Rollenware bei 35 °C, das heißt Reduzierung der Prägestrukturhöhe um maximal 30 % unter Aufrechterhaltung der Streulicht- und Verteilungseigenschaften,
◆ optionale Einsetzbarkeit von alternativen Lösungsmitteln, wie zum Beispiel ausgewählte Alkohole, Ether oder Ester, zu den üblicherweise verwendeten aromatischen Lösungsmitteln wie Xylol, Ethylbenzol oder Toluol, ohne dass eine allmähliche Herausbildung von Mikrostrukturen, Schlieren und Inhomogenitäten auftritt,
◆ hohe Langzeitstabilität der optischen Eigenschaften und der Haftungseigenschaften nach dem Aufkleben auf den Glasobjektträger bei einem Lagerungstest über die Dauer von 3 Monaten, einer Lagerungstemperatur von 23 °C und einer relativen Luftfeuchte von 50 %,
◆ Anhebungshöhe (Curl) der Folienränder von der Auflagefläche < 5 mm bei den von der Einzelrolle entnommenen Folienabschnitten mit einer Länge von 50 mm und einer Breite von 24 mm,
◆ Schichtdickenabweichung vom Mittelwert: < 3 %, jeweils linear über eine Länge von 3 m gemessen.

Durch zusätzliche Aufbringung einer oder mehrerer Hardcoat-Schichten auf das Foliensubstrat gemäß Punkt a₃) und/oder Einsatz verschiedener funktionaler Additive entsprechend Punkt a₄) können mit einer adhäsiven Beschichtung ausgestattete Cellulosetriacetatfolien mit folgenden erweiterten Anwendungseigenschaften erhalten werden:
◆ verbesserter Schutz gegen mechanische Beschädigung, Verkratzung oder Angriff von Lösungsmitteln, gekennzeichnet durch einen Pencil Hardness Wert von > 1H, gemessen mit No. 553-M Film Hardness Tester, Stepdown Transformer, 45°-Winkel, 500 g Auflagegewicht, abgerundete Mitsubishi Bleistiftmine; 23°C, 55 % relative Feuchte und einen Steel Wool Testwert von 0, gemessen mit YT-520 Eyeglass Surface Hardness Tester bei einem Auflagegewicht von 300 g, 12 Zyklen; 23°C, 55 % r. F. und/oder
◆ verbesserter UV-Schutz durch Einsatz von UV-Absorbern in der Folienmatrix und/oder in der Beschichtungsmatrix, gekennzeichnet durch eine Transmission bei 380 nm < 3 % und bei 400 nm < 10 % und/oder
◆ verbesserter IR-Schutz und Wärmestrahlungsabsorption durch Einsatz von IR-Absorbern in der Folienmatrix und/oder in der Beschichtungsmatrix, gekennzeichnet durch eine Transmission bei 900 nm < 15 % und bei 1.200 nm < 20 %, und/oder
◆ verbesserte elektrische Leitfähigkeit oder elektrostatische Ableitfähigkeit durch Einsatz elektrisch leitfähiger Polymere, nanoskaliger leitfähiger Additive, stark eutektischer Lösungsmittel (DES) oder Einsatz von Metallpartikeln in der Folienmatrix und/oder in der Beschichtungsmatrix,
◆ gezielt einstellbare Farbigkeit durch Einsatz von Licht absorbierenden oder reflektierenden Stoffen in der in der Folienmatrix und/oder in der Beschichtungsmatrix, gekennzeichnet durch folgende Farbwerte gemäß CIE-Lab 1976; 10°; D 65:
   ➢ L: 30 bis 90,
   ➢ a:-100bis+100,
   ➢ b: - 150 bis + 150.

Die neuartigen mit einer adhäsionsverbessernden und konservierenden multifunktionalen Beschichtung ausgestatteten hochtransparenten Cellulosetriacetatfolien können in folgenden Anwendungsbereichen eingesetzt werden:
◆ aufklebbare und reversibel entfernbare funktionelle Fensterfolien mit UV- und IR-Schutzfunktion, gezielt einstellbarer Farbigkeit und kratzfester Oberfläche,
◆ aufklebbare oder thermolaminierbare funktionelle Möbelschutzfolien oder Möbelfolien mit gezielt einstellbarer Farbigkeit und Kratzfestigkeit als Alternative zu aufzusprühenden Hochglanzlackoberflächen,
◆ auf Glasobjektträgern aufklebbare Eindeckfolien für Einzelanwendung oder in Eindeckautomaten,
◆ als Alternativmaterial zu beschichteten Glasobjektträgern oder Glasdeckgläsern für mikroskopische Anwendungen,
◆ als Fixierungs- und Konservierungsfolien zur Langzeitlagerung flacher bzw. flächenhafter dünner Objekte < 50 µm Schichtdicke, die optisch langfristig für mikroskopische Untersuchungen zugänglich sein müssen, wie zum Beispiel Gewebeproben, Haarproben, Papierproben,
◆ als Komponente in Sonnenbrillenlinsen oder in Lichtschutzschirmen.

Bei den Untersuchungen zu den Anwendungs- und Einsatzmöglichkeiten der neuartigen beschichteten hochtransparenten Cellulosetriacetatfolien hat sich überraschend herausgestellt, dass insbesondere eine sehr gute Eignung als Eindeckfolie zum Einsatz in Folieneindeckautomaten oder als Alternativfolie zu üblicherweise verwendeten beschichteten Glasobjektträgern oder beschichteten Deckgläsern vorliegt, wobei es sich aufgrund der hohen Transparenz als vorteilhaft erwiesen hat, wenn die Oberfläche der Beschichtung mit einer geometrisch exakt definierten und durch thermische Einwirkung oder Lösemittelbehandlung reversibel entfernbaren Oberflächenstruktur versehen wird, um durch die in den Automaten oftmals verwendeten Streulichtsensoren detektiert zu werden.

Die Oberflächenstruktur kann ein Muster aufweisen, welches aus Waben, Rauten, Rhomben, Quadraten, Dreiecken, Kreisen oder sinusförmigen Bögen besteht, wobei vorzugsweise die jeweilige Grundstruktur eine Größe von 5 bis 500 µm aufweist. Diese definierte Oberflächenstruktur dient auch dazu, eine verbesserte Benetzung zu ermöglichen und die aufgetropften Lösungsmittel gut zu verteilen.

Das Aufbringen der Oberflächenstruktur erfolgt vorzugsweise im Prägeverfahren mit Hilfe einer oberflächenstrukturierten Präzisionswalze unter Einwirkung mechanischer und thermischer Energie.

Gegenüber den bereits existierenden Eindeckfolienprodukten zeichnen sich die neuartigen beschichteten Cellulosetriacetatfolien durch die Kombination folgender Eigenschaften aus:
◆ hervorragende Transparenz, charakterisiert durch einen Haze-Wert von kleiner 0,3 %,
◆ sehr hohe Transmission im visuellen Bereich (380 nm bis 780 nm) von durchschnittlich > 89 %,
◆ niedriger Restlösungsmittelgehalt von < 2,0 %,
◆ sehr gute und schnelle Anklebbarkeit auf Glasobjektträger, das heißt bereits mit geringen Lösungsmittelmengen von < 25 mg/cm² (tropfenförmig verteilt) kann innerhalb von 5 Sekunden eine stabile Anhaftung des Folienmaterials auf dem Glasobjektträger erreicht werden,
◆ keine kurz- und langfristige Ausbildung von mikroskopisch bei 40-facher bis 400-facher Vergrößerung erkennbaren Mikrostrukturen nach dem Aufkleben auf den Objektträger,
◆ keine Ausbildung von Schlieren oder mikroskopisch erkennbaren Inhomogenitäten nach dem Aufkleben auf den Objektträger,
◆ sehr schmale Randabplatzungszone am Schnittrand, das heißt < 1 mm,
◆ gute Temperatur- und Lagerungsbeständigkeit der Rollenware bei Lagerung über 7 Tage bei 35 °C, das heißt, keine erkennbaren Verklebungen oder Beschichtungsablösungen nach dem Abrollen,
◆ gute mechanische und/oder thermisch unterstützte Prägbarkeit der Beschichtungsoberfläche zur besseren Verteilung der Lösungsmitteltropfen vor dem Aufkleben und zur Verbesserung der Detektion im Folienautomaten,
◆ hohe Formstabilität der Prägestruktur auch nach 7 Tagen Lagerung der Rollenware bei 35 °C, das heißt Reduzierung der Prägestrukturhöhe um maximal 30 % unter Aufrechterhaltung der Streulichteigenschaften,
◆ einfache Entfernbarkeit oder Reduzierung der aufgebrachten Prägestruktur durch Einwirkung organischer Lösungsmittel und/oder Temperatur
◆ hervorragende Langzeitstabilität der optischen Eigenschaften und der Haftungseigenschaften nach dem Aufkleben auf den Objektträger bei einer Lagerungstemperatur von 23 °C und einer relativen Luftfeuchte von 50 %,
◆ sehr gute Formstabilität der von der Einzelrolle entnommenen Folienabschnitte mit einer Länge von 50 mm und einer Breite von 24 mm, das heißt die Anhebung der Folienränder von der Auflagefläche liegt bei < 5 mm,
◆ sehr gute Dickenkonstanz der Trägerfolie und der Beschichtung, das heißt linear gemessen über eine Länge von 3 m liegt die Mittelwertabweichung der Gesamtdicke des Verbundes bei < 3 %.

Eine oder mehrere der erfindungsgemäßen hochtransparenten Folien ist/sind als auf Glas, Holz, Metall, Keramik, Cellulosederivatfolien oder Kunststoffen nach Anlösen oder thermischer Behandlung haftfähige Fensterfolie, Sonnenbrillenfolie, Laminierfolie, Möbelfolie, Eindeckfolie, Objektträgerfolie für die Mikroskopie, Deckglasersatzfolie und/oder Schutzfolie verwendbar. Angesichts des oben aufgeführten Eigenschaftsprofils stellt die Verwendung der neuartigen mit einer adhäsionsverbessernden multifunktionalen Beschichtung ausgestatteten Cellulosetriacetatfolien als Eindeckfolie und/oder Objektträgerfolie und/oder Deckglasfolie für die Mikroskopie den Hauptanwendungsbereich der vorliegenden Erfindung dar.

Im Rahmen der Anwendungsuntersuchungen wurde zudem überraschend festgestellt, dass als Lösungsmittel für das Eindeckmedium nicht nur die in der Histologie meist verwendeten Xylole, Xylol/Ethylbenzolgemische oder Xylol-Toluolgemische eingesetzt werden können, sondern dass hervorragende optische Eigenschaften auch durch Einsatz von alternativen, weniger toxischen oder umweltgefährdenden Lösungsmitteln, wie zum Beispiel ausgewählten Ethern, Estern oder Alkoholen erzielt werden können. Im Gegensatz zu anderen marktüblichen Eindeckfolien kommt es bei Einsatz dieser alternativen, weniger toxischen Lösungsmittel und Lösungsmittelgemische langfristig nicht, d.h. innerhalb von 2 - 4 Wochen nach dem Eindecken, zur allmählichen Herausbildung von Mikrostrukturen, Schlieren und Inhomogenitäten oder Abplatzungen der Beschichtung von der Trägerfolie.

In Auswertung umfangreicher Versuchsreihen wurden im Vergleich zu Xylol, Toluol oder Ethylbenzol weniger toxische Lösungsmittel identifiziert, die sich sehr gut für die Verklebung der neuartigen beschichteten Cellulosetriacetatfolien auf Glas, Metall, Holz und einige Kunststoffe eignen.

Auf Basis dieser Versuchsergebnisse wurde letztendlich ein Anlösemedium entwickelt, welches auch für die Anwendung im mikroskopischen Bereich für die Anlösung des Eindeckmediums bzw. der Beschichtungsschicht der Eindeckfolie verwendbar ist und in einer speziellen Ausführungsvariante sogar bei entsprechender Feststoffkonzentration als Eindeckmedium geeignet ist.

Dieses Anlösemedium umfasst folgende Komponenten:
◆ einen oder mehrere im Vergleich zu Toluol, Ethylbenzol oder Xylol weniger toxische Carbonsäureester, wie zum Beispiel Essigsäuremethylester, Essigsäureethylester, Essigsäurepropylester, Essigsäurebutylester, Kohlensäuredimethylester, Milchsäureethylester,
◆ und/oder einen oder mehrere im Vergleich zu Toluol, Ethylbenzol oder Xylol weniger toxische Ether, bevorzugt aus der Gruppe der Glykolether, wie zum Beispiel Diethylenglycolmonoethylether, Diethylenglykolmonobutylether, Propylenglycol-1-methylether, Dipropylenglycolmethylether und/oder aus der Gruppe der Alkylphenylether, wie zum Beispiel Methylphenylether,
◆ ein oder mehrere im Vergleich zu Toluol, Ethylbenzol oder Xylol weniger toxische Alkohole, bevorzugt Ethanol, Isopropanol und/oder Butanol und
◆ ein Acrylatcopolymer, bevorzugt aus der Substanzklasse des in der Beschichtung verwendeten Acrylatcopolymers.

Ein besonderes Merkmal dieses neuartigen Lösungsmittelgemisches für den Einsatz in Eindeckautomaten oder beim Eindecken von mikroskopischen Präparaten ist die Verwendung eines Acrylatcopolymers, welches zur Substanzklasse des in der Beschichtung verwendeten Acrylatcopolymers zugehörig ist und folgende Funktionen erfüllen soll:
◆ Einstellung der optimalen Viskosität für das exakt dosierbare Auftropfen des Lösungsmittelgemisches auf das Eindeckmedium, ohne dass es zum unnötigen Austreten bzw. Auslaufen von überschüssigem dünnflüssigem Lösungsmittel aus den Randbereichen und damit zur nachhaltigen Verschmutzung des Eindeckautomaten kommt,
◆ Einstellung einer optimalen Kombination aus der zum Eindecken des Präparates notwendigen Schichtdicke der Beschichtung und der erforderlichen Lösungsmittelmenge zum Anlösen der Beschichtung,
◆ Nachhaltige Verbesserung der Anhaftung an die Glasoberfläche und an das einzudeckende Präparat, sofern das Anlösemedium unmittelbar vor dem Ankleben direkt auf das Glas aufgetropft wird,
◆ Einstellbarkeit der Anlösegeschwindigkeit in Abhängigkeit von der Einsatzmenge des Acrylatcopolymers,
◆ Reduzierung oder Verhinderung der Ausbildung von Schlieren oder Strukturstörungen, die während der allmählichen Verdunstung des Lösungsmittels aus den Randbereichen entstehen und auf unterschiedliche Brechungsindizes der Beschichtungskomponenten und der eingesetzten Lösungsmittel zurückzuführen sind, und
◆ Ausbildung einer konservierenden, sich sukzessive verfestigenden Eindeckschicht bei Verwendung des Anlösemediums als Eindeckmedium.

Der Vergleich der unter 100-facher Vergrößerung erhaltenen mikroskopischen Aufnahmen von Haarpräparaten, die unter Verwendung von Xylol eingedeckt wurden, mit Haarpräparaten, die unter Verwendung des neuartigen Lösungsmittelgemisches eingedeckt wurden, zeigt eine verbesserte Tiefenschärfe und höhere Auflösbarkeit von Grenzflächen bei den letztgenannten Präparaten.

Des Weiteren wurde im direkten Vergleich eine schnellere Verfestigung des mit dem neuartigen Lösungsmittelgemisch angelösten Eindeckmediums festgestellt, d.h. die eingedeckten Präparate werden schneller mechanisch fixiert. Die Verfestigungszeit im Bereich des Haares lag unter Verwendung von Xylol bei 40 bis 48 h und bei Verwendung des neuartigen Lösungsmittelgemisches bei 24 bis 36 h.

Durch die erfindungsgemäßen beschichteten Folien ergibt sich sowohl für den Hersteller der Folien als auch für die weiterverarbeitenden Unternehmen sowie für den Endkunden eine Reihe von ökonomischen, ökologischen und qualitativen Vorteilen.

Da die beschichteten hochtransparenten Folien in ihrem Eigenschaftsprofil sehr homogen sind, können sie im Rahmen der weiteren Verarbeitung beispielsweise zu Laminaten für Schutzvisiere, Sonnenbrillen, Fensterfolien etc. sehr einfach miteinander kombiniert werden, ohne dass es an den Verklebungsflächen zu Lichtbrechungseffekten, Beugungserscheinungen oder optisch störenden Inhomogenitäten durch Toleranzwertaddition kommt. Der Haze-Wert der hergestellten Folienverbundprodukte kann dadurch deutlich geringer gehalten werden, d.h. deutlich unterhalb von 1 %. Ein wichtiger Vorteil ist die multiple Verklebbarkeit der Folien sowohl durch Einsatz verschiedener Lösungsmittel als auch durch die Einwirkung von thermischer Energie, ohne überhaupt Lösungsmittel einsetzen zu müssen.

Bei der bevorzugten Verwendung der beschichteten Folien als Eindeckfolien ist es möglich, nicht nur Einzelabschnitte in der Größe eines Objektträgers einzusetzen, sondern die Folie auf eine automatengeeignete schmale Einzelrolle aufzuwickeln bzw. die beschichtete Masterrolle entsprechend aufzuschneiden. Die Länge dieser schmalen Einzelrollen kann dabei aufgrund der geringen Dickentoleranz und der definierten Abstandshalterung und Adhäsion infolge der aufgebrachten Oberflächenstruktur bis zu 500 m betragen, ohne dass es zu einem Ausbrechen des Wickels oder zu Inhomogenitäten kommt. Die Temperaturstabilität (40 °C max. 24h) erlaubt in vielen Regionen der Welt einen Versand der Rollen zum Endkunden, ohne zwingend wie bisher auf einen Kühltransport zur Gewährleistung von Transporttemperaturen </= 25 °C angewiesen zu sein.

Aufgrund der Verwendbarkeit nichtaromatischer oder zumindest toxikologisch deutlich weniger bedenklichen Lösungsmittel bzw. Lösungsmittelgemische sowohl beim Herstellungsprozess als auch beim Endkunden kann eine erhebliche Reduzierung des toxikologischen Gefährdungspotentials sowohl für die Produktionsmitarbeiter als auch die Mitarbeiter im Aufstellungsbereich der Mikroskope und Eindeckautomaten erreicht werden. Das bei Vergleichsprodukten oftmals zu beobachtende geringfügige Ausgasen von aromatischen Lösungsmittelverbindungen auch noch lange nach dem Herstellungs- bzw. Eindeckprozess findet hierbei nicht mehr statt.

Für die Wiederablösung der Eindeckfolien vom Objektträger ist es nicht mehr zwingend erforderlich, die bisher verwendeten hochentzündlichen Lösungsmittel Aceton oder Methylethylketon zu verwenden, sondern die Ablösung kann sowohl nach kurzer Einwirkung alternativer Lösungsmittel, wie z.B. Ethanol, als auch nach kurzer Erwärmung auf zirka 60 °C erfolgen, sofern dies für das Präparat zulässig ist. Durch die Aufprägung einer definierten Verteilungsstruktur auf die Beschichtung kann die für das Anlösen der Haftschicht erforderliche Lösungsmitteleinsatzmenge reduziert werden, ohne dass es zu Beeinträchtigungen der Klebefähigkeit kommt. Dies ist auch ökologisch aufgrund der Ressourcenschonung als Vorteil anzusehen.

Bei Verwendung entsprechend geeigneter Additive können beschichtete farbige CTA-Folien und/oder beschichtete CTA-Folien mit IR- oder UV-Schutzfunktion erhalten werden. Diese eignen sich nach dem Auftragen einer äußeren kratzfesten Schicht sowohl als Fensterfolie als auch als Möbelfolie und können direkt auf die jeweilige Oberfläche entweder thermisch oder mit Hilfe geringer Lösungsmittelmengen aufgeklebt werden. Da die Verklebung langfristig haltbar und dennoch reversibel entfernbar ist, können bei eventuell aufgetretenen Beschädigungen oder bei veränderten Nutzungsanforderungen die CTA-Folien vom Trägermaterial entfernt werden, ohne dass es zu einer Zerstörung oder Beschädigung des Trägermaterials kommt.

Weitere Einzelheiten, Merkmale und Vorteile von Ausgestaltungen der Erfindung ergeben sich aus der nachfolgenden Beschreibung von Ausführungsbeispielen.

### Ausführungsbeispiel 1:

### Multifunktional beschichtete Cellulosetriacetatfarbfolie mit verbesserter Verklebbarkeit mit Oberflächen aus Glas, Holz und Metallen

Eine Folie mit einer Schichtdicke von 80 µm, bestehend aus einem Cellulosetriacetat mit möglichst niedrigem Haze-Wert ≤ 0,4 %, einem Weichmacher (Triphenylphosphat) in einer Konzentration von ≤ 12 % und Farbstoffadditiven (zum Beispiel Orasolrot 395 der Fa. Kremer Pigmente) in einer Konzentration < 1 % wird wie folgt beschichtet:
◆ Herstellen einer 10 %-igen Cellulosederivatlösung, bestehend aus 10 % Celluloseacetatpropionat, aufgelöst in einem Gemisch aus 39 % Aceton und 1 % Methylethylketon und 60 % Methylacetat und anschließendes Auftragen der Lösung mit Hilfe eines Rakels in einer Nassschichtdicke von max. 20 µm auf die 80 µm-CTA-Folie mit anschließender intensiver konvektiver Trocknung zur möglichst schnellen Entfernung der Lösungsmittel,
◆ Herstellen einer Beschichtungslösung, bestehend aus folgenden Komponenten, die bei einer Temperatur von 30 °C über mindestens 12 h miteinander verrührt und homogenisiert werden:
   ➢ 75 Massen-% Lösungsmittelgemisch, bestehend aus 45 % Toluol, 40 % Methoxypropanol, 15 % Dichlormethan,
   ➢ 22 Massen-% Acrylatcopolymergemisch, bestehend aus 75 % Paraloid B48N und 25 % Paraloid B72,
   ➢ 1,5 Massen-% Celluloseacetatpropionat (CAP),
   ➢ 1,5 Massen-% Weichmachergemisch, bestehend aus 80 % Triphenylphosphat (TPP) und 20 % Tris(2-chlorethyl)phosphat (TCEP).

Nach Ablauf der Rührzeit wird die Beschichtungslösung mit Hilfe eines Rakels in einer Nassschichtdicke von zirka 30 µm auf die primär beschichtete Seite der CTA-Folie aufgetragen und anschließend intensiv bei mindestens 120 °C für 20 min getrocknet.

Die so hergestellten hochtransparenten beschichteten farbigen CTA-Folien können nun durch Anlösen der Beschichtung mit Aceton oder Toluol auf eine Glasoberfläche, Holzoberfläche oder Metalloberfläche unter Anwendung eines Fensterfolienrakels aufgeklebt werden, ohne dass es zum eigenständigen Ablösen der Folie von der Oberfläche kommt. Die multifunktionale Beschichtung erlaubt auch die Anwendung thermischer Energie zum Aufkleben der Folie, das heißt, bereits durch das kurzzeitige Aufsetzen eines Bügeleisens oder einer ähnlichen Heizeinheit und anschließendem kurzen Anpressen der Folie auf die Oberfläche kann eine dauerhafte und dennoch reversibel lösbare Haftung der CTA-Folie realisiert werden.

Gegenüber einer unbeschichteten farbigen CTA-Folie ist eine deutlich bessere Haftung an den oben genannten Oberflächen gegeben, wobei nach wie vor die hohe Transparenz des Ausgangsmaterials erhalten bleibt.

### Ausführungsbeispiel 2

### Multifunktional beschichtete Cellulosetriacetatfolie zur Anwendung als Eindeckfolie für die Mikroskopie

Eine hochtransparente Folie (Haze-Wert < 0,5 %) mit einer Schichtdicke im Bereich von 120 bis 130 µm, bestehend aus Cellulosetriacetat und einem Weichmacher (Triphenylphosphat) in einer Konzentration von ≤ 12 % wird wie folgt beschichtet:
◆ Herstellen einer Beschichtungslösung, bestehend aus folgenden Komponenten, die bei einer Temperatur von 30 °C über mindestens 8 h miteinander verrührt und homogenisiert werden:
> 70 Massen-% Lösungsmittelgemisch, bestehend aus 75 % Ethylacetat und 25 % Methoxypropanol,
> 22 Massen-% Acrylatcopolymergemisch, bestehend aus 50 % Paraloid B99 und 50 % Paraloid B72,
➢ 1,5 Massen-% Celluloseacetatpropionat (CAP),
➢ 1,5 Massen-% Celluloseacetatbutyrat (CAB),
➢ 5 Massen-% Weichmachergemisch, bestehend aus 50 % Diethylphthalat und 50 % Diisononylphthlat.

Nach Ablauf der Rührzeit wird die Beschichtungslösung mit Hilfe eines Rakels in einer Nassschichtdicke von zirka 65 µm auf die CTA-Folie aufgetragen und anschließend intensiv bei 125 °C für 45 min getrocknet.

Es hat sich bewährt, hierbei eine 3D-Oberflächenstruktur auf die beschichtete Seite der Folie aufzubringen - beispielsweise durch Verwendung mehrerer Andruckwalzen mit definierter Rauhheit und/oder Oberflächengeometrie.

Die so hergestellten beschichteten CTA-Folien können nun auf das erforderliche Maß für den Einsatz als Eindeckfolie geschnitten werden - zum Beispiel als Einzelschnitt 50 mm x 24 mm oder als Rolle 75 m x 24 mm. Diese konfektionierten Eindeckfolien sind bei einer Temperatur von 5 °C - 35 °C über mindestens 12 Wochen lager- und transportfähig, ohne dass es zu Beeinträchtigungen des Produktes kommt.

Durch Auftropfen von 3 - 5 Tropfen Xylol oder Ethylbenzol aus einer 5 ml-Einwegpipette auf die beschichtete Seite kann die Beschichtung angelöst und die Folie sofort auf einen Objekträger, auf dem das Mikroskopierobjekt bereits aufgebracht wurde, geklebt werden. Hier empfiehlt sich die Verwendung einer gummierten Rolle als Andruckrolle für das gleichmäßige Fixieren der Folie auf dem Objektträgerglas.

Die Objekte können anschließend sofort mikroskopisch untersucht werden, wobei aufgrund der hohen Transparenz der CTA-Folie und der Beschichtung keine Störung der Beobachtungsmatrix erfolgt.

Durch Einlagerung dieser eingedeckten Objektträger bei einer Temperatur von 20 °C bis 25 °C und einer relativen Luftfeuchte von zirka 50 % kann eine Langzeitkonservierung der eingedeckten Objekte über mindestens 12 Wochen erreicht werden, ohne dass es zu optisch erkennbaren Beeinträchtigungen des zu mikroskopierenden Objektes kommt.

Durch kurzzeitiges Einlegen des eingedeckten Objektträgers in Aceton (zirka 30 Sekunden) kann auch nach mehrmonatiger Lagerzeit sehr schnell die Folie wieder vom Objektträger gelöst werden. Das zu untersuchende Objekt steht dann für weitere Untersuchungen wieder zur Verfügung.

Bei Vergleich mit derzeit marktüblichen Eindeckfolien verschiedener Hersteller zeigt sich, dass die entsprechend diesem Ausführungsbeispiel hergestellten beschichteten CTA-Folien vergleichbare Anwendungs- und Lagerungseigenschaften aufweisen, die einen Einsatz als Eindeckfolie für die Mikroskopie und die Verwendung in Eindeckautomaten als zulässig erscheinen lassen.

## Patentansprüche

1. Hochtransparente Folie auf der Basis von Cellulosetriacetat, umfassend
a) eine als Trägerschicht wirkende Trägerfolie, die Cellulosetriacetat oder ein Gemisch aus Celluloseestern und Cellulosetriacetat als Hauptkomponente enthält, wobei das Cellulosetriacetat oder das Gemisch eine hohe Reinheit und Qualität aufweist, die durch einen Haze-Wert von ≤ 0,5 %, bestimmt durch Methode ASTM D 1003, D 1044, definiert ist, gemessen an dem zu einer Folie ausgezogenen, zuvor in Dichlormethan oder Aceton gelösten Cellulosetriacetat oder Gemisch mit einer Schichtdicke von 100 µm, und
b) eine in einer Beschichtungslösung einseitig oder beidseitig auf die Trägerfolie aufgetragene multifunktionale Beschichtung, die die folgenden Komponenten umfasst:
b₁) ein oder mehrere Lösungsmittel aus den nachfolgend aufgeführten Gruppen:
◆ Alkohole: Methanol, Ethanol, Propanol, Butanol, Hexanol;
◆ halogenorganische Lösungsmittel: Chloroform, Dichlormethan, Trichlormethan, Tetrachlormethan, Trichlorethan;
◆ Ether: Dimethylether, Diethylether, Dipropylether, Polyether, Glycolether, Tetrahydrofuran, Dioxan;
◆ Ester: Carbonsäureester, insbesondere Essigsäuremethylester, Essigsäureethylester, Essigsäurepropylester, Essigsäurebutylester, Gamma-Butyrolacton, Gamma-Valerolacton, Kohlensäuredimethylester, Milchsäureethylester, Cyclohexanolacetat,
◆ Ketone: Aceton, Methylethylketon, Butylmethylketon,
◆ Aromaten: Benzol, Toluol, Xylol, Ethylbenzol,
◆ stark eutektische Lösungsmittel (DES) auf der Basis von quartären Ammoniumverbindungen und Wasserstoffbrückenbindungsdonatoren: Cholinchlorid/Harnstoff; Cholinacetat/Harnstoff; Tetrabutylammoniumchlorid/ Oxalsäure; Cholinchlorid/Glykol,
b₂) ein oder mehrere Acrylatcopolymere mit einem Brechungsindex (gemessen bei 20 °C) zwischen 1,30 und 1,60, einem mittleren Molekulargewicht Mw zwischen 10.000 g/mol und 300.000 g/mol, einer Glasübergangstemperatur von mindestens 35 °C und einer guten Löslichkeit oder Anquellbarkeit in mindestens einem Lösungsmittel aus der Gruppe der aromatischen Lösungsmittel, halogenorganischen Lösungsmittel, Ester, Ether, Ketone, stark eutektischen Lösungsmittel oder Alkohole, wobei das eine oder die mehreren Acrylatcopolymere aus der Gruppe der Methylmethacrylatcopolymere, Ethylacrylatcopolymere, Ethylmethacrylatcopolymere, Butylacrylatcopolymere und/oder Butylmethacrylatcopolymere ausgewählt sind;
b₃) mindestens ein einzelnes oder mehrere Cellulosederivate, welche entweder identisch mit dem in der Oberflächenschicht der Trägerfolie gegebenenfalls eingesetzten Cellulosederivat sind oder zumindest in einem Lösungsmittel aus mindestens einer der nachfolgend aufgeführten Lösungsmittelgruppen der Halogenalkane, Ketone, Ether, Ester, stark eutektischen Lösungsmittel oder Alkohole eine Löslichkeit von mindestens 10 g/Liter besitzen,
b₄) einen oder mehrere Weichmacher in einem Mengenanteil zwischen insgesamt 0,01 Massen- % und 15 Massen- %.

2. Hochtransparente Folie nach Anspruch 1, **dadurch gekennzeichnet, dass** die als Trägerschicht wirkende Trägerfolie die folgenden Komponenten umfasst:
a₁) ein Cellulosetriacetat oder Gemisch aus Celluloseestern und Cellulosetriacetat als Hauptkomponente, das außer durch den Haze-Wert von ≤ 0,5 % durch die folgenden Eigenschaften definiert ist:
◆ als Rohstoffbasis Baumwoll-Linters und/oder Holzzellstoff (Wood pulp),
◆ einen Wasseranteil von ≤ 1 %,
◆ einen Anteil freier Essigsäure von ≤ 300 ppm,
◆ einen Anteil von gelbildenden Komponenten von ≤ 0,5 %,
◆ eine sehr geringe Gelbfärbung, charakterisiert durch eine niedrige Hazen-Farbzahl (APHA-Wert) ≤ 70 (bestimmt an einer 16 %-igen Lösung von Cellulosetriacetat gelöst in Methylenchlorid nach der Methode ASTM D-1209),
◆ einen Anteil von ≤ 0,5 % an Fremdfasern und über- oder unterderivatisierten Partikeln mit einer Größe von ≤ 40 µm, bestimmt durch die Methode der Filtration über verschiedene Filter mit jeweils definierter Porenweite, und
a₂) mindestens einen organischen oder anorganischen Stoff, der als Verbundvermittler und Abstandshalter zwischen den Molekülketten des Cellulosetriacetats wirksam ist und als Weichmacher wirkt; so dass dieser Stoff neben einer verbesserten Entfernbarkeit der Lösungsmittel auch eine verbesserte Flexibilität und Elastizität der Folien bewirkt,
a₃) zur Verbesserung des Kontaktwinkels und/oder der Kratzfestigkeit der Trägerfolie eine einseitig oder beidseitig vorliegende Oberflächenschicht auf der Basis eines in Halogenalkanen, Ketonen, Ethern, Estern, stark eutektischen Lösungsmitteln oder Alkoholen vollständig gelösten oder teilweise angelösten Celullosederivates oder Cellulosederivatgemisches und/oder eines Acrylatgemisches, welches mit UV-Licht, chemisch oder durch Zufuhr thermischer Energie vernetzbar ist,
a₄) gegebenenfalls weitere funktionale Additive aus den folgenden Gruppen in einem Mengenanteil zwischen 0,001 Massen- % und 15 Massen- %:
◆ organische oder anorganische Stoffe mit einer transmissionsbeeinflussenden absorptiven Funktion im Wellenlängenbereich von 300 nm bis 2.500 nm,
◆ mikroskalige oder nanoskalige Additive zur Verbesserung der Haftung, des Gleitverhaltens oder der elektrostatischen Eigenschaften,
◆ Vernetzungsmittel,
◆ Stabilisierungsmittel und/oder
◆ Antioxidantien,
wobei der oder die gemäß a₂) und b₄) als Weichmacherkomponente eingesetzte/eingesetzten Stoff/Stoffe aus der Gruppe der Phosphorsäureester, Phthalsäureester, Carbonsäureester, Glykole, stark eutektischen Lösungsmittel und/oder Polyester ausgewählt ist/sind und einen Siedepunkt größer als 60 °C aufweist/aufweisen.

3. Hochtransparente Folie nach Anspruch 1 oder 2, **dadurch gekennzeichnet, dass** es sich bei dem/den jeweils eingesetzten Cellulosederivat/Cellulosederivaten um Celluloseacetat (CA) und/oder Cellulosediacetat (CDA) und/oder Cellulosetriacetat (CTA) und/oder Celluloseacetobutyrat (CAB) und/oder Celluloseacetatpropionat (CAP) und/oder Methylcellulose (MC), Ethylcellulose (EC) und/oder Hydroxypropylcellulose (HPC) handelt.

4. Hochtransparente Folie nach einem der Ansprüche 1 bis 3, **dadurch gekennzeichnet, dass** die multifunktionale Beschichtung auf Basis einer Beschichtungslösung erhalten wird, die
◆ nur einen der Weichmacher,
◆ nur eines der Cellulosederivate,
◆ maximal zwei der Lösungsmittel aus nur einer der Lösungsmittelgruppe und
◆ nur eines der Acrylatcopolymere enthält.

5. Hochtransparente Folie nach Anspruch 4, **dadurch gekennzeichnet, dass** die Beschichtung eine Trockenschichtdicke von 5 µm bis 35 µm und die Folie eine Gesamtdicke im Bereich von 120 µm bis 270 µm aufweist.

6. Hochtransparente Folie nach Anspruch 5, **dadurch gekennzeichnet, dass** die Beschichtungsoberfläche eine definierte Oberflächenstruktur aufweist, die durch die Aufprägung mittels einer Präzisionsprägewalze unter Anwendung mechanischer und/oder thermischer Energie erhältlich ist, durch nachfolgende Lösungsmitteleinwirkung und/oder thermische Energie in ihrer Stärke beinflussbar ist und durch folgende sich zweidimensional wiederholende geometrische Muster charakterisiert werden kann:
◆ hexagonale Waben, Rhomboide, Rhomben, Quadrate, Rechtecke, Kreise, Sinusförmige Kreisbögen und/oder Dreiecke mit einem inneren Durchmesser oder Abstandsmaß von 10 µm bis 500 µm, einer Steghöhe der Linien von 2 µm bis 15 µm und einer Stegbreite von 1 µm bis 200 µm.

7. Verwendung einer oder mehrerer hochtransparenter Folien nach einem der Ansprüche 1 bis 6 als auf Glas, Holz, Metall, Keramik, Cellulosederivatfolien oder Kunststoffen nach Anlösen oder thermischer Behandlung haftfähige Fensterfolie, Sonnenbrillenfolie, Laminierfolie, Möbelfolie, Eindeckfolie, Objektträgerfolie für die Mikroskopie, Deckglasersatzfolie und/oder Schutzfolie.

## Claims

1. High-transparency film based on cellulose triacetate, comprising
a) a carrier film which acts as carrier layer and comprises cellulose triacetate or a mixture of cellulose esters and cellulose triacetate as main component, where the cellulose triacetate or the mixture has a high purity and quality which is defined by a haze value of ≤ 0.5%, determined by method ASTM D 1003, D 1044, measured on the cellulose triacetate or mixture dissolved beforehand in dichloromethane or acetone and drawn out to a film with a layer thickness of 100 µm, and
b) a multifunctional coating applied in a coating solution on one side or both sides to the carrier film, and comprising the following components:
b₁) one or more solvents from the groups set out below:
◆ alcohols: methanol, ethanol, propanol, butanol, hexanol;
◆ halo-organic solvents: chloroform, dichloromethane, trichloromethane, tetrachloromethane, trichloroethane;
◆ ethers: dimethyl ether, diethyl ether, dipropyl ether, polyethers, glycol ethers, tetrahydrofuran, dioxane;
◆ esters: carboxylic esters, more particularly methyl acetate, ethyl acetate, propyl acetate, butyl acetate, gamma-butyrolactone, gammavalerolactone, dimethyl carbonate, ethyl lactate, cyclohexanol acetate,
◆ ketones: acetone, methyl ethyl ketone, butyl methyl ketone,
◆ aromatics: benzene, toluene, xylene, ethylbenzene,
◆ deep eutectic solvents (DES) based on quaternary ammonium compounds and hydrogen bond donors: choline chloride/urea; choline acetate/urea; tetrabutylammonium chloride/oxalic acid; choline chloride/glycol,
b₂) one or more acrylate copolymers having a refractive index (measurement at 20°C) of between 1.30 and 1.60, an average molecular weight M_{w} of between 10 000 g/mol and 300 000 g/mol, a glass transition temperature of at least 35°C and a good solubility or initial swellability in at least one solvent from the group of the aromatic solvents, halo-organic solvents, esters, ethers, ketones, deep eutectic solvents or alcohols, where the one or the two or more acrylate copolymers are selected from the group of methyl methacrylate copolymers, ethyl acrylate copolymers, ethyl methacrylate copolymers, butyl acrylate copolymers and/or butyl methacrylate copolymers;
b₃) at least one single or two or more cellulose derivatives, which either are identical with the cellulose derivative used optionally in the surface layer of the carrier film or possess a solubility of at least 10 g/litre at least in one solvent from at least one of the below-listed solvent groups of the haloalkanes, ketones, ethers, esters, deep eutectic solvents or alcohols,
b₄) one or more plasticizers in a proportion of between in total 0.01 mass% and 15 mass%.

2. High-transparency film according to Claim 1, **characterized in that** the carrier film acting as carrier layer comprises the following components:
a₁) a cellulose triacetate or a mixture of cellulose esters and cellulose triacetate as main component, which other than by the haze value of ≤ 0.5% is defined by the following properties:
◆ as the raw material basis, cotton linters and/or wood pulp,
◆ a water fraction of ≤ 1%,
◆ a fraction of free acetic acid of ≤ 300 ppm,
◆ a fraction of gel-forming components of ≤ 0.5%,
◆ very little yellowing, **characterized by** a low Hazen colour number (APHA value) ≤ 70 (determined on a 16% strength solution of cellulose triacetate dissolved in methylene chloride by the method of ASTM D-1209),
◆ a fraction of ≤ 0.5% of foreign fibres and over- or under-derivatized particles having a size of s 40 µm, determined by the method of filtration through different filters each of defined pore size, and
a₂) at least one organic or inorganic substance which is active as an assembly mediator and spacer between the molecular chains of the cellulose triacetate and acts as a plasticizer; and so this substance, in addition to improved removability of the solvents, also brings about improved flexibility and elasticity of the films,
a₃) for improving the contact angle and/or the scratch resistance of the carrier film, a surface layer which is present on one side or both sides and is based on a cellulose derivative mixture or cellulose derivative which is fully dissolved or partially dissolved in haloalkanes, ketones, ethers, esters, deep eutectic solvents or alcohols, and/or on an acrylate mixture which is crosslinkable with UV light, chemically or by supply of thermal energy,
a₄) optionally further functional additives from the following groups in a proportion of between 0.001 mass% and 15 mass%:
◆ organic or inorganic substances having a transmission-influencing absorptive function in the wavelength range from 300 nm to 2500 nm,
◆ microscale or nanoscale additives for improving the adhesion, the slip behaviour or the electrostatic properties,
◆ crosslinking agents,
◆ stabilizers and/or
◆ antioxidants,
where the substance/substances used as plasticizer component under a₂) and b₄) is/are selected from the group of the phosphoric esters, phthalic esters,
carboxylic esters, glycols, deep eutectic solvents and/or polyesters and has/have a boiling point of greater than 60°C.

3. High-transparency film according to Claim 1 or 2, **characterized in that** the cellulose derivative/cellulose derivatives used in each case are cellulose acetate (CA) and/or cellulose diacetate (CDA) and/or cellulose triacetate (CTA) and/or cellulose acetobutyrate (CAB) and/or cellulose acetate-propionate (CAP) and/or methylcellulose (MC), ethyl cellulose (EC) and/or hydroxypropylcellulose (HPC).

4. High-transparency film according to any of Claims 1 to 3, **characterized in that** the multifunctional coating is obtained on the basis of a coating solution which comprises
◆ only one of the plasticizers,
◆ only one of the cellulose derivatives,
◆ not more than two of the solvents from only one of the solvent groups and
◆ only one of the acrylate copolymers.

5. High-transparency film according to Claim 4, **characterized in that** the coating has a dry film thickness of 5 µm to 35 µm and the film has a total thickness in the range from 120 µm to 270 µm.

6. High-transparency film according to Claim 5, **characterized in that** the coating surface has a defined surface structure which is obtainable by embossing by means of a precision embossing roll with application of mechanical and/or thermal energy, can be influenced in its magnitude by subsequent solvent exposure and/or thermal energy, and can be **characterized by** the following twodimensionally repeating geometric patterns:
◆ hexagonal cells, rhomboids, rhombuses, squares, rectangles, circles, sinusoidal arcs and/or triangles having an internal diameter or clearance of 10 µm to 500 µm, a land height of the lines of 2 µm to 15 µm and a land width of 1 µm to 200 µm.

7. Use of one or more high-transparency films according to any of Claims 1 to 6 as window film, sunglasses film, laminating film, furniture film, wrapping film, slide films for microscopy, replacement cover glass film and/or protective film which, after partial dissolution or thermal treatment, is adherent to glass, wood, metal, ceramic, cellulose derivative films or plastics.

## Revendications

1. Feuille hautement transparente à base de triacétate de cellulose, comprenant
a) une feuille de support agissant comme couche de support, qui contient un triacétate de cellulose ou un mélange d'esters de cellulose et de triacétate de cellulose en tant que composant principal, le triacétate de cellulose ou le mélange présentant une pureté et une qualité élevées qui sont définies par une valeur de trouble de ≤ 0,5 %, déterminée par la méthode de la norme ASTM D 1003, D 1044, mesurée sur le triacétate de cellulose ou le mélange, précédemment dissous dans du dichlorométhane ou de l'acétone, étiré en une feuille comportant une épaisseur de couche de 100 µm, et
b) un revêtement multifonctionnel appliqué, sur un côté ou les deux côtés de la feuille de support, dans une solution de revêtement, qui comprend les composants suivants :
b₁) un ou plusieurs solvants parmi les groupes indiqués ci-après :
• alcools : méthanol, éthanol, propanol, butanol, hexanol ;
• solvants organiques halogénés : chloroforme, dichlorométhane, trichlorométhane, tétrachlorométhane, trichloroéthane ;
• éthers : diméthyléther, diéthyléther, dipropyléther, polyéther, éther de glycol, tétrahydrofuranne, dioxanne ;
• esters : esters d'acides carboxyliques en particulier acétate de méthyle, acétate d'éthyle, acétate de propyle, acétate de butyle, gamma-butyrolactone, gammavalérolactone, carbonate de diméthyle, tartrate d'éthyle, acétate de cyclohexanol,
• cétone : acétone, méthyléthylcétone, butylméthylcétone,
• composés aromatiques : benzène, toluène, xylène, éthylbenzène,
• solvants fortement eutectiques (DES) à base de composés de type ammonium quaternaire et de donneur de liaison hydrogène : chlorure de choline/urée ; acétate de choline/urée ; chlorure de tétrabutylammonium/acide oxalique ; chlorure de choline/glycol,
b₂) un ou plusieurs copolymères d'acrylate dotés d'un indice de réfraction (mesuré à 20 °C) compris entre 1,30 et 1,60, d'un poids moléculaire moyen M_{w} compris entre 10 000 g/mole et 300 000 g/mole, d'une température de transition vitreuse de moins 35 °C et d'une bonne solubilité ou aptitude au gonflement dans au moins un solvant du groupe composé par des solvants aromatiques, des solvants organiques halogénés, des esters, des éthers, des cétones, des solvants fortement eutectiques ou des alcools, le ou les copolymères d'acrylate étant choisis dans le groupe composé par des copolymères de méthacrylate de méthyle, des copolymères d'acrylate d'éthyle, des copolymères de méthacrylate d'éthyle, des copolymères d'acrylate de butyle et/ou des copolymères de méthacrylate de butyle ;
b₃) au moins un seul ou plusieurs dérivés de cellulose qui sont soit identiques au dérivé de cellulose éventuellement utilisé dans la couche de surface de la feuille de support, soit possèdent une solubilité d'au moins 10 g/L dans un solvant parmi au moins l'un des groupes de solvants indiqués ci-après : halogénoalcanes, cétones, éthers, esters, solvants fortement eutectiques ou alcools,
b₄) un ou plusieurs plastifiants en une proportion comprise au total entre 0,01 % en masse et 15 % en masse.

2. Feuille hautement transparente selon la revendication 1, **caractérisée en ce que** la feuille de support agissant comme couche de support comprend les composants suivants :
a₁) un triacétate de cellulose ou un mélange d'esters de cellulose et de triacétate de cellulose en tant que composant principal, qui est défini, outre par la valeur de trouble de ≤ 0,5 %, par les caractéristiques suivantes :
• du linters de coton et/ou de la pâte de bois (pulpe de bois) en tant que matière première de base,
• une proportion en eau de ≤ 1 %,
• une proportion en acide acétique libre de ≤ 300 ppm,
• une proportion en composants formant un gel de ≤ 0,5 %,
• un très faible jaunissement, **caractérisé par** un indice de couleur Hazen (valeur APHA) ≤ 70 (déterminé sur une solution à 16 % de triacétate de cellulose dissous dans du chlorure de méthylène selon la méthode de la norme ASTM D-1209),
• une proportion de ≤ 0,5 % de fibres étrangères et de particules sur-dérivatisées ou sous-dérivatisées comportant une taille de ≤ 40 µm, déterminée par la méthode de filtration sur différents filtres dotés à chaque fois d'une taille de pores définie, et
a₂) au moins une matière organique ou inorganique qui agit comme médiateur de liaison et espaceur entre les chaînes de molécules du triacétate de cellulose et agit comme plastifiant ; de sorte que cette matière, outre un effet d'élimination améliorée des solvants, a également un effet de flexibilité et d'élasticité améliorées des feuilles,
a₃) une couche superficielle présente sur un côté ou les deux côtés, pour l'amélioration de l'angle de contact et/ou de la résistance à l'abrasion de la feuille de support, à base d'un dérivé de cellulose ou d'un mélange de dérivés de cellulose et/ou d'un mélange d'acrylate totalement ou partiellement dissous dans des halogénoalcanes, des cétones, des éthers, des esters, des solvants fortement eutectiques ou des alcools, qui est réticulable avec de la lumière UV, chimiquement ou par apport d'énergie thermique,
a₄) éventuellement d'autres additifs fonctionnels parmi les groupes suivants en une proportion comprise entre 0,001 % en masse et 15 % en masse :
• des matières organiques ou inorganiques dotées d'une fonction absorbante influençant la transmission dans le domaine de longueur d'onde de 300 nm à 2 500 nm,
• des additifs micrométriques ou nanométriques pour l'amélioration de l'adhérence, du comportement au glissement ou des propriétés électrostatiques,
• des agents de réticulation
• des stabilisants et/ou
• des antioxydants,
la ou les matières utilisées en tant que composant plastifiant selon a₂) et b₄) étant choisies dans le groupe composé par des esters d'acide phosphorique,
des esters d'acide phtalique, des esters d'acides carboxyliques, des glycols, des solvants fortement eutectiques et/ou des polyesters et présentant un point d'ébullition supérieur à 60 °C.

3. Feuille hautement transparente selon la revendication 1 ou 2, **caractérisée en ce que** le ou les dérivés de cellulose utilisés à chaque fois sont un acétate de cellulose (CA) et/ou un diacétate de cellulose (CDA) et/ou un triacétate de cellulose (CTA) et/ou un acétobutyrate de cellulose (CAB) et/ou un acétate propionate de cellulose (CAP) et/ou une méthylcellulose (MC), une éthylcellulose (EC) et/ou une hydroxypropylcellulose (HPC).

4. Feuille hautement transparente selon l'une quelconque des revendications 1 à 3, **caractérisée en ce que** le revêtement multifonctionnel est obtenu à base d'une solution de revêtement qui contient
• seulement l'un des plastifiants,
• seulement l'un des dérivés de cellulose,
• au maximum deux des solvants d'un seul des groupes de solvants et
• seulement l'un des copolymères d'acrylate.

5. Feuille hautement transparente selon la revendication 4, **caractérisée en ce que** le revêtement présente une épaisseur de couche sèche de 5 µm à 35 µm et la feuille présente une épaisseur totale dans la plage de 120 µm à 270 µm.

6. Feuille hautement transparente selon la revendication 5, **caractérisée en ce que** la surface de revêtement présente une structure de surface définie qui peut être obtenue par le gaufrage au moyen d'un rouleau de gaufrage de précision avec application d'énergie mécanique et/ou thermique, dont la résistance peut être influencée par l'action ultérieure de solvant et/ou par énergie thermique et qui peut être **caractérisée par** les motifs géométriques répétitifs bidimensionnels suivants :
• alvéoles hexagonales, rhomboïdes, losanges, carrés, rectangles, cercles, arcs de cercle sinusoïdaux et/ou triangles dotés d'un diamètre ou d'une mesure de distance interne de 10 µm à 500 µm, d'une hauteur d'arête des lignes de 2 µm à 15 µm et d'une largeur d'arête de 1 µm à 200 µm.

7. Utilisation d'une ou plusieurs feuilles hautement transparentes selon l'une quelconque des revendications 1 à 6 en tant que feuille pour fenêtre, feuille pour lunettes de soleil, feuille laminée, feuille pour meuble, feuille de couverture, feuille de support d'objet pour la microscopie, feuille de remplacement de verre de couverture et/ou feuille protectrice adhésives après dissolution ou traitement thermique sur du verre, du bois, du métal, de la céramique, des feuilles de dérivé de cellulose ou des matières plastiques.
